# EUROPEAN PATENT SPECIFICATION

(11) **EP 1 545 108 B1**
(45) Date of publication and mention of the grant of the patent: **06.06.2007**
(21) Application number: 03293275.8
(22) Date of filing: 19.12.2003
(51) Int. Cl.: H04M 3/53

(54) **Telecommunication system for terminals with a message recording system**
Telekommunikationsanordnung für Endgeräten mit Nachrichtenaufnahmesystem
Système de télécommunication pour terminaux avec un système d' enregistrement de messages

(43) Date of publication of application: 22.06.2005
(73) Proprietor: Alcatel Lucent, 75008 Paris (FR)
(72) Inventor: Marce, Olivier, 91300 Massy (FR); El Mghazli, Yacine, 94110 Arcueil (FR)
(74) Representative: Narmon, Gisèle Marie Thérèse

(56) References cited:
- EP-A- 1 033 856
- US-A1- 2002 165 966
- "Universal Mobile Telecommunications System (UMTS);Multimedia Messaging Service (MMS), Functional description; Stage 2 (3GPP TS 23.140 version 4.2.0 Release 4)" , ETSI TS 123 140 V4.2.0, XX, XX XP002180514 * paragraph [04.2]; figure 2 * * paragraph [6.1.1] * * paragraph [6.1.5] *

## Description

The present invention relates to a telecommunication system according to the non-characteristic part of claim 1 A multimedia message is more particularly a data message, and/or audio message and/or video message that can be transmitted into a telecommunication system. The telecommunication system can be set up for the communication of, for example, a mobile terminal belonging to a network of "GSM" (Global System for Mobile), "UMTS" (Universal Mobile Telecommunications System) or "Internet" type, in which the transmission signal can present some perturbations. The invention is dedicated typically to telecommunication systems using mobile phones or digital cellular telephones as multimedia transmitter.

When a caller reaches, in an audio or video communication with a mobile, the called messaging box and leaves an audio-video message, the message might be of poor quality and sometimes unintelligible because the quality of the mobile network can vary with the time and the positioning of the mobile.

US 2002/165966 A1 (Tan Thian J et Al) describes a method to assure end-to-end quality of service for a multimedia communication between terminals by negotiating a quality of service to be supported in dependence of the network resources and EP-A-1 033 856 provides a system where improved recording quality is either automatically carried out by an analysis circuit at receiver side or is in response to initial instructions from the caller. None of these however give a caller the possibility to resend his message based on the quality of the recorded message.

Then the only way the caller could notice that the recorded message is of bad or good quality is to listen to the recorded message directly after recording.

This feature is not often used by the callers who consider that the quality of the transmission is usually good. The check of the message quality only relies on the caller decision.

Furthermore the operation of listening to the recorded message has to be done directly after the recording of the message and the quality of the network during the checking can be bad. It might thus be the reception of the recorded message by the caller that causes the return message to be unintelligible.

Most of the time such a check is not needed and the time the caller is listening to the recorded message is billed for no reason.

This technique is consequently not very efficient to determine whether the recorded message is good or not in terms of reliability and cost.

The object of the invention is to eliminate the above-mentioned drawbacks by providing a telecommunication system in which the caller can decide to call again in order to leave a new message.

This object is achieved according to the characteristic part of claim 1 whereby the caller is automatically informed of the message quality of restitution.

According to another embodiment of the invention, this information is constituted by a part of the multimedia message, so that the caller can check by himself if the message is of bad quality.

According to another embodiment of the invention, the information is a text.

According to still another embodiment of the invention, the information is represented by a ratio of digits on a quality scale, so that the caller can appreciate personally the quality level of the message determined by the message recording system.

According to another embodiment of the invention, the information is a vocal information.

According to a preferred embodiment of the invention, the information is sent back to the transmitter terminal in response to the detection of a parameter of control recorded into the profile of the transmitter and / or receiver terminal. The users can decide precisely how to use this option of telecommunication in term of conditions of usefulness and of mode of transmission of the indicative information.

According to yet another preferred embodiment of the invention, the information is sent back if the quality of restitution measured is inferior to a predetermined threshold. A communication extra cost to send the indicative information is added only when this information seems to be necessary, and according to the users profiles.

According to another embodiment of the invention, the measure of the quality of restitution consists in using a video quality measurement technique.

According to another embodiment of the invention, the measure of the quality of restitution consists in using an audio quality measurement technique, which is for example of PAMS, PESQ or psyVoIP type.

According to another embodiment of the invention, the terminals are cellular terminals of the "GSM" type.

According to another embodiment of the invention, the information is sent by SMS or by MMS to the transmitter terminal. When the message recording system has sent the indicative information, this indicative information is recorded into the memory of the transmitter terminal, so that no further paying communications are needed to check the said information, the quality of the information received is always good, and the information can be used at any time.

Further, according to the present invention, there is provided a method of telecommunication between a mobile transmitter terminal and a receiver terminal in which a message recording system records a multimedia message sent by said mobile transmitter terminal into a messaging box of said receiver terminal wherein that the message recording system measures the quality of restitution of the recorded multimedia message and sends back to the transmitter terminal an indicative information of said quality of restitution.

The present invention will be further understood and appreciated from the following detailed description taken in conjunction with the drawing in which:

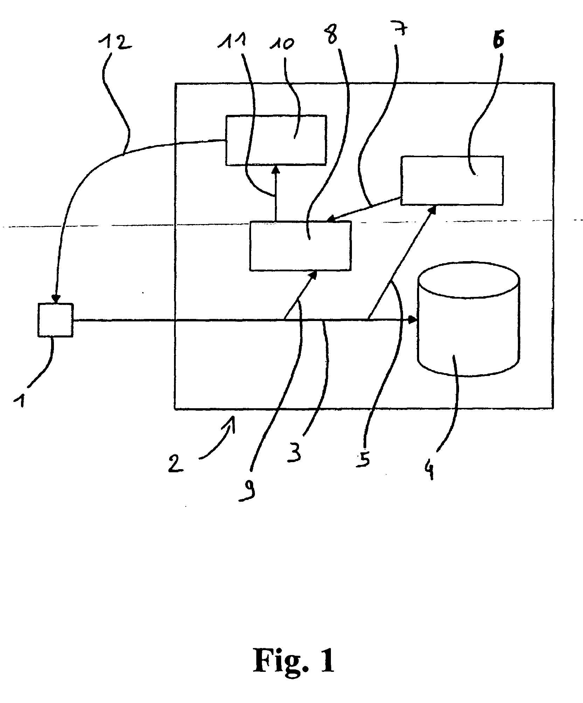

Figure 1 is a schematic block diagram of a telecommunication system according to the invention.

Figure 1 schematically shows the operation of a telecommunication system according to the invention in which a transmitter terminal 1 wants to communicate with a receiver terminal not represented and is in relation with the message recording system 2 of the receiver terminal. The transmitter terminal 1 which is mobile in a network and is for example a mobile phone, transmits an audio and/or video message 3 to the message recording system 2. The message recording system records the message 3 into the messaging box 4 of the receiver terminal which can be any type of terminal of the network and possibly a home phone in our example. The home phone will be able to accede to the messaging box 4 and the recorded message at any time.

The audio-video message 3 transmitted by the mobile phone 1 is processed further 5 into the message recording system 2 through a message quality measurement module 6. This module aims at measuring the quality of restitution of the message by different ways that will be develop below and at sending an information 7 of the message quality of restitution to a decision module 8 belonging to the message recording system 2.

The decision module 8 receives the quality of restitution information 7 and decides, together with the instructions 9 it has extracted beforehand from the audio-video message 3 concerning the transmitter 1 and receiver terminals profiles, whether an indicative information of the message quality of restitution has to be sent to the transmitter terminal or not and the form under which the indicative information has to be sent.

The message recording system 2 further comprise an automatic sender 10 that executes the instructions 11 of the decision module 8 and can send the indicative information 12 representative of the message quality of restitution to the transmitter terminal 1.

The determination of the message quality of restitution is determined automatically into the message quality measurement module 6 through any type of analysis of the received data.

In case of an audio message, the quality measurement can be done for example by different known techniques as PESQ (Perceptual Evaluation of the Speech Quality) or PAMS (Perceptual Analysis Measurement System). The measurement module 6 can also be provided with the software named "PsyVoIP" of the "Psytechnics" company which is an extension to PESQ designed to predict the voice quality on an audio network on a MOS (Mean Opinion Score) scale recommended by an ITU Standard. The quality of the speech is then given by a score on the scale extending from 5 = Excellent to 1 = Bad.

In case of a video message, the quality measurement can be done by any known VQM (Video Quality Measurement) technique and for example by MSE (Mean Square Error) or PSNR (Peak Signal-to-Noise Ratio) techniques and all their variants which analyse the perceptual quality in terms of quality/distortion statistics. Various HVS (Human Vision System) features can be correlated with the VQM comprising luminance contrast sensitivity, frequency contrast sensitivity and masking effects.

The information 7 of the message quality of restitution is forwarded from the message quality measurement module 6 to the decision module 8 as a given number on a quality scale. The decision module 8 knows now the message quality of restitution and decides if an indicative information 12 of the message quality of restitution has to be sent to the transmitter terminal 1 according to some pre-established parameters. This parameters are accompanying the message 3 concerning the transmitter terminal profile and/or are pre-configured into the message recording system 2 concerning the receiver terminal profile. These profiles can be chosen and changed by the terminal users in the terminal configurations. The profiles configurations can be of different types, providing then different issues as described hereafter and given by way of example only.

In a preferred embodiment and configuration of the profiles, the transmitter and/or the receiver terminals are configured, with priority orders providing which profile prevails over the other, in order the message recording system 2 sends an information message 12 if the scaleable message quality of restitution measured is below a given threshold. The thresholds can be fixed and recorded into the terminals by the users.

In an other profile configuration the transmitter terminal asks compulsorily for an indicative information message for a specific recorded message. The user pressing a special key during the call, for example if the message is particularly important, can do this.

In an other configuration, the transmitter terminal asks always or never for an information message.

The manner to send the indicative information message 12 is given further into the transmitter and receiver profiles configured by users. The decision module 8 analyses all this parameters with their priority orders and decides the constitution of message that has to be sent. The indicative information message 12 can be of different types and can use different media as describe hereafter and given by way of example only.

The indicative information message 12 is send as a data packet (or as data packets) to the transmitting terminal that can thereby conserve the indicative information message into its own memory. Then the user can access to this indicative information message at any time.

The data packet corresponds to a multimedia message, a SMS like (Short Message Service : short alphanumeric message), or a MMS like (Multimedia Message Service : textual, audio, video message). The user can choose between those media the preferred one according to terminal possibilities, sending costs and utilities.

When a SMS is sent to the transmitter terminal, it can contain a fixed message like "The recorded message seems to be of bad quality" or a more precise indication of the message quality of restitution like a ratio of digits on a quality scale : "The recorded message is of 2/5 on a quality scale".

In addition to the preceding presentations of the indicative information of quality, the MMS allows the visualisation or the listening of a part of the audio-video message or of the whole audio-video message.

The advantages of such a telecommunication system compared to the prior art are that it is configurable dynamically by the users and if the configuration is done properly, it is less expensive because only a little extra cost (sending of the SMS or MMS) is necessary and only advisedly. Furthermore, it is impossible not to be aware that a message is of bad quality because the information of quality is sent automatically, the quality of the information quality message does not depend on the quality of the reception of the call and the message can be listen at any time and as many times as needed without extra-cost.

It will be appreciated that the invention is not limited to what has been described here above by way of example and can be used in any message recording system, for example in the telecommunication systems between computers.

## Claims

1. Telecommunication system including a mobile transmitter terminal (1), a receiver terminal and a message recording system (2), said message recording system comprising a messaging box (4) for said receiver terminal, said messaging box (4) being adapted to record a multimedia message (3) sent by said mobile transmitter terminal (1), **characterised in that** said message recording system (2) is adapted to measure a quality of restitution of said recorded multimedia message and to send back to said mobile transmitter terminal (1) an indicative information (12) of the said quality of restitution.

2. Telecommunication system according to claim 1, wherein said indicative information (12) is constituted by a part of said multimedia message.

3. Telecommunication system according to claim 1, wherein said indicative information (12) is a text.

4. Telecommunication system according to claim 1, wherein said indicative information (12) is represented by a ratio of digits on a quality scale.

5. Telecommunication system according to claim 1, wherein said indicative information (12) is a vocal information.

6. Telecommunication system according to any of claims 1 to 5, wherein said message recording system (2) is adapted to send said indicative information (12) back to said mobile transmitter terminal (1) in response to the detection of a parameter of control recorded into the profile of the mobile transmitter and / or receiver terminal.

7. Telecommunication system according to any of claims 1 to 6, wherein said message recording system (2) is adapted to send said indicative information (12) back if the quality of restitution measured is inferior to a predetermined threshold.

8. Telecommunication system according to any of claims 1 to 7, wherein said message recording system (2) is adapted to measure said quality of restitution using a video quality measurement technique.

9. Telecommunication system according to any of claims 1 to 7, wherein said message recording system (2) is adapted to measure said quality of restitution by using an audio quality measurement technique which is for example of PAMS, PESQ or psyVoIP type.

10. Telecommunication system according to any of claims 1 to 9, wherein said mobile terminal is a cellular terminal of the "GSM" type.

11. Telecommunication system according to claim 1, wherein said message recording system (2) is adapted to send said indicative information (12) by SMS or by MMS to said mobile transmitter terminal.

12. Method of telecommunication between a mobile transmitter terminal and a receiver terminal in which a message recording system records a multimedia message sent by said mobile transmitter terminal into a messaging box of said receiver terminal, **characterised in that** the message recording system measures the quality of restitution of the recorded multimedia message and sends back to the transmitter terminal an indicative information of said quality of restitution.

## Patentansprüche

1. Telekommunikationssystem einschließlich eines mobilen Sende-Endgeräts (1), eines Empfänger-Endgeräts und eines Nachrichtenaufnahmesystems (2), wobei dieses Nachrichtenaufnahmesystem eine Nachrichtenbox (4) für dieses Empfänger-Endgerät umfasst und diese Nachrichtenbox (4) zur Aufnahme einer von diesem mobilen Sender-Endgerät (1) gesendeten Multimedianachricht (3) abgestimmt wurde, **dadurch gekennzeichnet, dass** dieses Nachrichtenaufnahmesystem (2) zur Messung der Wiederherstellungsqualität dieser aufgenommenen Multimedianachricht und zum Zurückschicken einer Meldeinformation (12) über diese Wiederherstellungsqualität an das Sender-Endgerät (1) angepasst wurde.

2. Telekommunikationssystem nach Anspruch 1, wobei diese Meldeinformationen (12) durch einen Teil dieser Multimedianachricht gebildet werden.

3. Telekommunikationssystem nach Anspruch 1, wobei es sich bei diesen Meldeinformationen (12) um einen Text handelt.

4. Telekommunikationssystem nach Anspruch 1, wobei diese Meldeinformationen (12) durch ein Verhältnis von Ziffern auf einer Qualitätsskala ausgedrückt werden.

5. Telekommunikationssystem nach Anspruch 1, wobei es sich bei diesen Meldeinformationen (12) um gesprochene Informationen handelt.

6. Telekommunikationssystem nach Anspruch 1 bis 5, wobei dieses Nachrichtenaufnahmesystem (2) zum Senden dieser Meldeinformationen (12) zurück an dieses mobile Sender-Endgerät (1) als Reaktion auf die Erkennung eines Steuerparameters, der im Profil des Endgeräts des mobilen Sender- und/oder Empfänger-Endgeräts aufgezeichnet wurde, angepasst wurde.

7. Telekommunikationssystem nach Anspruch 1 bis 6, wobei dieses Nachrichtenaufnahmesystem (2) zum Zurücksenden dieser Meldeinformationen (12) angepasst wurde, wenn die gemessene Wiederherstellungsqualität niedriger ist als ein vordefinierter Schwellenwert.

8. Telekommunikationssystem nach Anspruch 1 bis 7, wobei dieses Nachrichtenaufnahmesystem (2) zur Messung dieser Wiederherstellungsqualität mithilfe eines Verfahrens zur Messung der Videoqualität angepasst wurde.

9. Telekommunikationssystem nach Anspruch 1 bis 7, wobei dieses Nachrichtenaufnahmesystem (2) zur Messung dieser Wiederherstellungsqualität mithilfe eines Verfahrens zur Messung der Audioqualität, beispielsweise PAMS, PESQ oder psyVoIP, angepasst wurde.

10. Telekommunikationssystem nach Anspruch 1 bis 9, wobei es sich bei diesem mobilen Endgerät um ein mobiles Endgerät des Typs "GSM" handelt.

11. Telekommunikationssystem nach Anspruch 1, wobei dieses Nachrichtenaufnahmesystem (2) zum Senden dieser Meldeinformationen (12) per SMS oder MMS an dieses mobile Sender-Endgerät angepasst wurde.

12. Telekommunikationsverfahren zwischen einem mobilen Sender-Endgerät und einem Empfänger-Endgerät, bei dem ein Nachrichtenaufnahmesystem eine von diesem mobilen Sender-Endgerät gesendete Nachricht in einer Nachrichtenbox dieses Empfänger-Endgeräts aufzeichnet, **dadurch gekennzeichnet, dass** das Nachrichtenaufnahmesystem die Wiederherstellungsqualität der aufgenommenen Multimedianachricht misst und eine Meldeinformation über diese Wiederherstellungsqualität an das Sender-Endgerät zurück schickt.

## Revendications

1. Système de télécommunication comprenant un terminal émetteur mobile (1), un terminal récepteur et un système d'enregistrement de message (2), ledit système d'enregistrement de message comprenant une boîte de messagerie (4) pour ledit terminal récepteur, ladite boîte de messagerie (4) étant adaptée pour enregistrer un message multimédia (3) envoyé par ledit terminal émetteur mobile (1), **caractérisé en ce que** ledit système d'enregistrement de message (2) est adapté pour mesurer une qualité de restitution desdits messages multimédia enregistrés et pour envoyer en retour au dit terminal émetteur mobile (1) des informations révélatrices (12) sur ladite qualité de restitution.

2. Système de télécommunication selon la revendication 1, dans lequel lesdites informations révélatrices (12) sont constituées par une partie dudit message multimédia.

3. Système de télécommunication selon la revendication 1, dans lequel lesdites informations révélatrices (12) sont un texte.

4. Système de télécommunication selon la revendication 1, dans lequel lesdites informations révélatrices (12) sont représentées par un taux numérique sur une échelle de qualité.

5. Système de télécommunication selon la revendication 1, dans lequel lesdites informations révélatrices (12) sont des informations vocales.

6. Système de télécommunication selon l'une quelconque des revendications 1 à 5, dans lequel ledit système d'enregistrement de message (2) est adapté pour renvoyer lesdites informations révélatrices (12) au dit terminal émetteur mobile (1) en réponse à la détection d'un paramètre de commande enregistré dans le profil du terminal mobile émetteur et/ou récepteur.

7. Système de télécommunication selon l'une quelconque des revendications 1 à 6, dans lequel ledit système d'enregistrement de message (2) est adapté pour renvoyer lesdites informations révélatrices (12) si la qualité de restitution mesurée est inférieure à un seuil prédéterminé.

8. Système de télécommunication selon l'une quelconque des revendications 1 à 7, dans lequel ledit système d'enregistrement de message (2) est adapté pour mesurer ladite qualité de restitution en utilisant une technique vidéo de mesure de qualité.

9. Système de télécommunication selon l'une quelconque des revendications 1 à 7, dans lequel ledit système d'enregistrement de message (2) est adapté pour mesurer ladite qualité de restitution en utilisant une technique audio de mesure de qualité qui est par exemple du type PAMS, PESQ ou psyVolP.

10. Système de télécommunication selon l'une quelconque des revendications 1 à 9, dans lequel ledit terminal mobile est un terminal cellulaire du type « GSM ».

11. Système de télécommunication selon la revendication 1, dans lequel ledit système d'enregistrement de message (2) est adapté pour envoyer lesdites informations révélatrices (12) par SMS ou par MMS au dit terminal émetteur mobile.

12. Procédé de télécommunication entre un terminal émetteur mobile et un terminal récepteur dans lequel un système d'enregistrement de message enregistre un message multimédia, envoyé par ledit terminal émetteur mobile, dans une boîte de messagerie dudit terminal récepteur, **caractérisé en ce que** le système d'enregistrement de message mesure la qualité de restitution du message multimédia enregistré et envoie en retour au terminal émetteur des informations révélatrices sur ladite qualité de restitution.
